(19) Europäisches Patentamt

European Patent Office

Office européen des brevets

(11) **EP 4 563 397 A1**

(12) **EUROPEAN PATENT APPLICATION**
published in accordance with Art. 153(4) EPC

(43) Date of publication:
04.06.2025 Bulletin 2025/23

(21) Application number: 23929851.6

(22) Date of filing: 25.09.2023

(51) International Patent Classification (IPC):
**B60L 15/20** (2006.01)

(52) Cooperative Patent Classification (CPC):
Y02T 10/72

(86) International application number:
**PCT/CN2023/121067**

(87) International publication number:
**WO 2024/198277 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 31.03.2023 CN 202310333800

(71) Applicant: **Deepal Automobile Nanjing Research
Institute Co., Ltd.
Nanjing, Jiangsu 211200 (CN)**

(72) Inventors:
• LIAO, Zhongxu
  Chongqing 401135 (CN)
• CHEN, Yang
  Chongqing 401135 (CN)
• LIU, Li
  Chongqing 401135 (CN)
• LIN, Yuting
  Chongqing 401135 (CN)
• PENG, Yang
  Chongqing 401135 (CN)

(74) Representative: **DREISS Patentanwälte PartG
mbB
Friedrichstraße 6
70174 Stuttgart (DE)**

(54) **DIFFERENTIAL PROTECTION METHOD AND APPARATUS, ELECTRIC VEHICLE, AND STORAGE MEDIUM**

(57) The present application relates to the technical field of new energy electric drive system control, and in particular to a differential protection method and apparatus, an electric vehicle, and a storage medium. The method comprises: acquiring a rotation speed difference between rotating speed half shafts in a differential and an output torque of a driving motor; matching a torque threshold of the driving motor according to the rotation speed difference, and determining whether the rotation speed difference is within a preset protection interval and whether the output torque is greater than the torque threshold; and when the rotation speed difference is within the preset protection interval and the output torque is greater than the torque threshold, activating a differential protection function of the differential, and using the differential protection function to reduce the output torque of the driving motor to a target torque; and otherwise, not activating the differential protection function. Thus, the problems in the related art of poor driving performance of a vehicle, poor user experience, and the like caused by being unable to avoid simultaneous activation of a differential protection function of a differential and a traction control system due to limitation of the differential protection function are solved.

FIG. 1

Description

## CROSS-REFERENCE TO RELATED APPLICATION

This application is based on and claims priority to China Patent Application No. 202310333800.4, filed on March 31, 2023, the entire contents of which are incorporated herein by reference.

## TECHNICAL FIELD

The present disclosure relates to the field of control technology for new energy electric drive system, and in particular to a method and a device for protecting a differential, an electric vehicle, and a storage medium.

## BACKGROUND

In the development of new energy vehicles, main components of an electric drive axle include a motor controller, a driving motor, a transmission gear, and a differential. An operating principle of the electric drive axle is that the driving motor outputs a target value through a demand torque, and the torque is transmitted by the transmission gear and finally transmitted to a left half shaft and a right half shaft through the differential. When the vehicle runs straight on a smooth road surface, rotational speeds of a left wheel and a right wheel are the same, and a planetary gear of the differential has no rotation relative to a planetary gear shaft. When the rotational speeds of the left wheel and the right wheel are different, the planetary gear of the differential begins to rotate relative to the planetary gear shaft. In a limit state, when the wheel at one side of the vehicle is fixed and the wheel at the other side of the vehicle is off the ground, the wheel off the ground rotates at twice the rotational speed of a differential housing, and the planetary gear rotates at a high speed. This condition is prone to differential failure, affecting the driving safety of users.

At present, accorindg to a detection mechanism of a vehicle slip fault, generally, an output torque of the motor is reduced by a Traction Control System (TCS) and a braking force is applied to a slipping wheel to slow down an expansion of the rotational speed difference between the left wheel and the right wheel, thereby realizing smooth driving or getting out of predicament of the vehicle. However, the following problems remain.

Problem 1: When the TCS function fails or is turned off and the vehicle starts or accelerates on a slippery road surface, the output torque of the motor cannot be reduced in time. Under this condition, if the rotational speed difference between the left wheel and the right wheel is too large, the planetary gear of the differential may rotate at a high speed and this situation cannot be effectively suppressed, resulting in the differential failure and affecting the driving safety of the whole vehicle.

Problem 2: When the TCS function is normal and turned on, the vehicle starts or accelerates on the slippery road surface, and the TCS fails to control the rotational speed difference between the left wheel and the right wheel to a safety range of the differential, the output torque of the motor cannot be adjusted in time, and this condition may still cause the differential failure, affecting the driving safety of the whole vehicle.

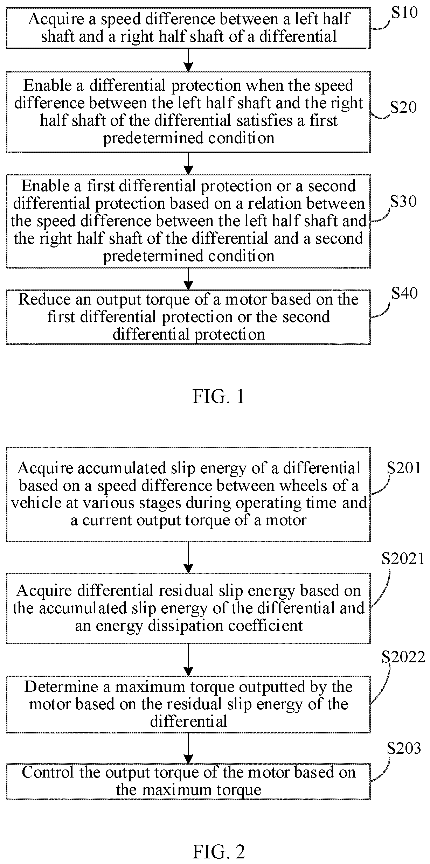

In view of the above problems, Patent CN115675108A provides a method and a device for controlling active protection of a vehicle, an electronic apparatus, and a storage medium. As shown in FIG. 1, the method mainly includes: directly acquiring a speed difference between a left half shaft and a right half shaft of a differential; enabling a first differential protection when the speed difference satisfies a first predetermined condition; enabling a second differential protection when the speed difference satisfies a second predetermined condition; and reducing an output torque of a motor based on the first differential protection or the second differential protection. However, due to the high possibility of triggering the differential protection function on a real vehicle, it is easy to cause obvious vibration of a vehicle body, which affects the user experience of the vehicle, and there is a risk of simultaneous activation of the TCS with the differential protection function when the vehicle is in a differential protection condition during an actual operation, which causes the output torque of the motor to fluctuate between reduction and increasement, affecting the driving performance of the whole vehicle.

Patent CN115143259A realizes the differential protection in a way by (as shown in FIG. 2): acquiring accumulated slip energy of a differential based on a speed difference between wheels of a vehicle at various stages during operating time and a current output torque of a motor; determining a maximum torque outputted by the motor based on the accumulated slip energy of the differential; controlling the output torque of the motor based on the maximum torque. However, if a boundary of the differential protection exceeds a boundary of the TCS, the differential protection may be activated before the TCS when the vehicle is in predicament, which may affect the driving performance of the vehicle.

In Patent CN102358181A, a device for protecting a differential includes a differential solenoid valve and a differential toggle switch for controlling the differential solenoid valve to be powered on or powered off, and further includes a differential control unit. The differential control unit is configured to: determine whether the vehicle turns when the differential solenoid valve is powered on, and enable the differential solenoid valve to be powered off when the vehicle turns on. This patent differs significantly from the present disclosure in terms of a designed working principle and a workflow.

To sum up, the related art is aimed at protecting the differential of the vehicle, and the following problems exist. (1) Because the condition range of the differential protection is too large, the possibility of triggering the differential protection function when the differential protection function is applied to the real vehicle is relatively high, which easily causes obvious vibration of the vehicle body and affects the user experience of the vehicle. (2) When the differential protection condition is met, due to the risk of simultaneous activation of the TCS with the differential protection function, the output torque of the motor fluctuates between reduction and increasement, affecting the driving performance of the whole vehicle.

## SUMMARY

The present disclosure provides a method and a device for protecting a differential, an electric vehicle, and a storage medium, to solve the problems in the related art in which a differential protection function of the differential has limitations and cannot avoid being activated simultaneously with the traction control system, which affects the driving performance of the vehicle, and the user experience of the vehicle is poor.

Embodiments of a first aspect of the present disclosure provide a method for protecting a differential. The method includes: acquiring a rotational speed difference between rotational speeds of half shafts in the differential and an output torque of a driving motor; matching a torque threshold of the driving motor based on the rotational speed difference, and determining whether the rotational speed difference is in a predetermined protection interval and whether the output torque is greater than the torque threshold; and activating a differential protection function of the differential and reducing the output torque of the driving motor to a target torque by using the differential protection function when the rotational speed difference is in the predetermined protection interval and the output torque is greater than the torque threshold; and not activating the differential protection function when the rotational speed difference is not in the predetermined protection interval and/or the output torque is not greater than the torque threshold.

According to the above technical means, in the embodiments of the present disclosure, the rotational speed difference between the rotational speeds of the half shafts in the differential and the output torque of the driving motor are acquired, and the torque threshold of the driving motor is matched based on the rotational speed difference. Whether the rotational speed difference is in the predetermined protection interval, and whether the output torque is greater than the torque threshold are determined. In this case, the differential protection function of the differential is activated only when two conditions are satisfied simultaneously, thus avoiding frequent activation of the differential protection function. In addition, the differential protection function is utilized to reduce the output torque of the driving motor to the target torque until the electric vehicle gets out of predicament, and active protection for the differential is realized by monitoring the rotational speed difference between a left wheel and a right wheel and an output torque change of the motor. Therefore, the driving safety of the vehicle is improved, and the user experience of the vehicle is improved.

Optionally, the predetermined protection interval includes one or more rotational speed intervals. A rotational speed interval with a greater rotational speed corresponds to a smaller predetermined torque. The differential protection function includes: matching a predetermined torque of the driving motor based on the rotational speed interval in which the rotational speed difference is located, and reducing the output torque of the driving motor to the predetermined torque.

According to the above technical means, in the embodiments of the present disclosure, the predetermined protection interval includes a plurality of rotational speed intervals, allowing multiple differential protection to be performed to ensure a safe driving of the vehicle. The differential protection function mainly matches the predetermined torque of the driving motor based on the rotational speed interval in which the rotational speed difference is located, and reduces the output torque of the driving motor, thereby reducing the rotational speed difference between the left wheel and the right wheel, increasing a braking force of the wheel, and realizing a smooth driving or getting out of predicament of the vehicle.

Optionally, the method for protecting the differential further includes, before activating the differential protection function of the differential: detecting whether a traction control system is activated; activating the differential protection function in a case where the traction control system is not activated; and in a case where the traction control system is activated and after the output torque of the driving motor is reduced by using the traction control system, activating the differential protection function when the rotational speed difference is in the predetermined protection interval and the output torque is greater than the torque threshold, and not activating the differential protection function when the rotational speed difference is not in the predetermined protection interval and/or the output torque is not greater than the torque threshold.

According to the above technical means, in the embodiments of the present disclosure, before activating the differential protection function of the differential, whether the traction control system is activated is detected. In a case where the traction control system is not activated, the differential protection function is directly activated. In a case where the traction control system is activated and after the output torque of the driving motor is reduced by using the traction control system, the differential protection function is activated when the rotational speed difference is in the protection interval and the output torque is greater than the torque threshold. It avoids the differential protection function and the traction control system being activated simultaneously which affects the driving performance of the vehicle and causes differential failure, thereby improving the driving safety of the vehicle.

Optionally, an execution priority of the traction control system is higher than an execution priority of the differential protection function.

According to the above technical means, in the embodiments of the present disclosure, the execution priority of the traction control system is higher than the execution priority of the differential protection function. In this way, when the vehicle slips, the output torque of the motor is firstly reduced, and a braking force is applied to a slipping wheel to slow down an expansion of the rotational speed difference between the left wheel and the right wheel. Then, the differential protection function is activated based on an actual situation, and the output torque of the driving motor is reduced to the predetermined torque. It avoids the differential protection function and the traction control system being activated simultaneously which affects the driving performance of the vehicle, thereby improving the driving safety of the vehicle.

Optionally, the method for protecting the differential further includes, after reducing the output torque of the driving motor to the target torque by using the differential protection function: detecting whether a current state of an electric vehicle satisfies an exit condition for the differential protection function; and releasing a torque limit on the driving motor and restoring the driving motor to respond a request torque when the current state of the electric vehicle satisfies the exit condition for the differential protection function.

According to the above technical means, in the embodiments of the present disclosure, when the electric vehicle is out of predicament, the torque limit on the driving motor is released in time, and the driving motor is restored to respond to the request torque, thereby improving the driving smoothness of the vehicle.

The embodiments of a second aspect of the present disclosure provide a device for protecting a differential. The device includes: an acquisition module configured to acquire a rotational speed difference between rotational speeds of half shafts in the differential and an output torque of a driving motor; a matching module configured to match a torque threshold of the driving motor based on the rotational speed difference, and determine whether the rotational speed difference is in a predetermined protection interval and whether the output torque is greater than the torque threshold; and a processing module configured to: activate a differential protection function of the differential and reduce the output torque of the driving motor to a target torque by using the differential protection function when the rotational speed difference is in the predetermined protection interval and the output torque is greater than the torque threshold; and not activate the differential protection function when the rotational speed difference is not in the predetermined protection interval and/or the output torque is not greater than the torque threshold.

Optionally, the predetermined protection interval includes one or more rotational speed intervals. A rotational speed interval with a greater rotational speed corresponds to a smaller predetermined torque. The differential protection function includes: matching a predetermined torque of the driving motor based on the rotational speed interval in which the rotational speed difference is located, and reducing the output torque of the driving motor to the predetermined torque.

Optionally, the processing module is further configured to: detect whether a traction control system is activated; activate the differential protection function in a case where the traction control system is not activated; and in a case where the traction control system is activated and after the output torque of the driving motor is reduced by using the traction control system, activate the differential protection function when the rotational speed difference is in the predetermined protection interval and the output torque is greater than the torque threshold, and not activate the differential protection function when the rotational speed difference is not in the predetermined protection interval and/or the output torque is not greater than the torque threshold.

Optionally, an execution priority of the traction control system is higher than an execution priority of the differential protection function.

Optionally, the processing module is further configured to: detect whether a current state of an electric vehicle satisfies an exit condition for the differential protection function; and release a torque limit on the driving motor and restore the driving motor to respond to a request torque when the current state of the electric vehicle satisfies the exit condition for the differential protection function.

The embodiments of a third aspect of the present disclosure provide a vehicle. The vehicle includes a memory, a processor, and a computer program stored in the memory and executable by the processor. The processor, when executing the computer program, implements the method for protecting the differential as described in the above embodiments.

The embodiments of a fourth aspect of the present disclosure provide a computer-readable storage medium, having a computer program stored thereon. A processor, when executing the computer program, implements the method for protecting the differential as described in the above embodiments.

Therefore, the present disclosure has at least the following beneficial effects:

(1) In the embodiments of the present disclosure, the rotational speed difference between the rotational speeds of the half shafts in the differential and the output torque of the driving motor are acquired, and the torque threshold of the driving motor is matched based on the rotational speed difference. Whether the rotational speed difference is in the predetermined protection interval, and whether the output torque is greater than the torque threshold are determined.

In this case, the differential protection function of the differential is activated only when two conditions are satisfied simultaneously, thus avoiding frequent activation of the differential protection function. In addition, the differential protection function is utilized to reduce the output torque of the driving motor to the target torque, and active protection for the differential is realized by monitoring the rotational speed difference between a left wheel and a right wheel and an output torque change of the motor. Therefore, the driving safety of the vehicle is improved, and the user experience of the vehicle is improved.

(2) In the embodiments of the present disclosure, the predetermined protection interval includes a plurality of rotational speed intervals, allowing multiple differential protection to be performed to ensure a safe driving of the vehicle. The differential protection function mainly matches the predetermined torque of the driving motor based on the rotational speed interval in which the rotational speed difference is located, and reduces the output torque of the driving motor, thereby reducing the rotational speed difference between the left wheel and the right wheel, increasing a braking force of the wheel, and realizing a smooth driving of the vehicle.

(3) In the embodiments of the present disclosure, before activating the differential protection function of the differential, whether the traction control system is activated is detected. In a case where the traction control system is not activated, the differential protection function is directly activated. In a case where the traction control system is activated and after the output torque of the driving motor is reduced by using the traction control system, the differential protection function is activated when the rotational speed difference is in the protection interval and the output torque is greater than the torque threshold. It avoids the differential protection function and the traction control system being activated simultaneously which affects the driving performance of the vehicle and causes differential failure, thereby improving the driving safety of the vehicle.

(4) In the embodiments of the present disclosure, the execution priority of the traction control system is higher than the execution priority of the differential protection function. In this way, when the vehicle slips, the output torque of the motor is firstly reduced, and a braking force is applied to a slipping wheel to slow down an expansion of the rotational speed difference between the left wheel and the right wheel. Then, the differential protection function is activated based on an actual situation, and the output torque of the driving motor is reduced to the predetermined torque. It avoids the differential protection function and the traction control system being activated simultaneously which affects the driving performance of the vehicle, thereby improving the driving safety of the vehicle.

(5) In the embodiments of the present disclosure, when the electric vehicle satisfies the exit condition of the differential protection function, the torque limit on the driving motor is released in time, and the driving motor is restored to respond to the request torque, thereby improving the driving smoothness of the vehicle.

Additional aspects and advantages of the present disclosure may be given at least in part in the following description, or become apparent at least in part from the following description, or can be learned from practicing of the present disclosure.

## BRIEF DESCRIPTION OF DRAWINGS

The above and/or additional aspects and advantages of the present disclosure may become more apparent and more understandable from the following description of embodiments taken in conjunction with the accompanying drawings.

FIG. 1 is a flowchart of a method for controlling active protection of a vehicle in the related art.
FIG. 2 is a flowchart of a method for controlling protection of a differential in the related art.
FIG. 3 is a flowchart of a method for protecting a differential according to an embodiment of the present disclosure.
FIG. 4 is a schematic diagram of a protection principle of a differential according to an embodiment of the present disclosure.
FIG. 5 is a schematic flowchart of a method for protecting a differential according to an embodiment of the present disclosure.
FIG. 6 is an example diagram of a device for protecting a differential according to an embodiment of the present disclosure.
FIG. 7 is a schematic structural diagram of an electric vehicle according to an embodiment of the present disclosure.

## DESCRIPTION OF THE EMBODIMENTS

Embodiments of the present disclosure may be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

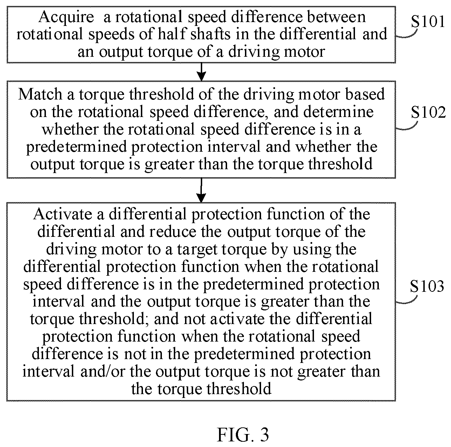

A method and a device for protecting a differential, an electric vehicle, and a storage medium according to the embodiments of the present disclosure are described below with reference to the accompanying drawings. Specifically, FIG. 3 is a schematic flowchart of a method for protecting a differential according to an embodiment of the present disclosure.

As shown in FIG. 3, the method for protecting the differential includes following steps.

In step S101, acquire a rotational speed difference between rotational speeds of half shafts in the differential and an output torque of a driving motor.

The rotational speed difference is calculated as: △n =|n left wheel - n right wheel|, where n is a rotational speed.

It can be understood that the embodiments of the present disclosure obtains the rotational speed difference between a left wheel and a right wheel in the differential and the output torque of the driving motor, to subsequently determine whether a condition for activating the differential protection function is satisfied.

In step S102, match a torque threshold of the driving motor based on the rotational speed difference, and determine whether the rotational speed difference is in a predetermined protection interval and whether the output torque is greater than the torque threshold.

The torque threshold may be an interval of torque allowed to be outputted by the driving motor within the current rotational speed difference, and may be set based on actual conditions, which is not specifically limited herein.

The predetermined protection interval includes one or more rotational speed intervals. The rotational speed interval with a greater rotational speed corresponds to a smaller predetermined torque.

The predetermined torque may be a torque set by a user, and may be adjusted based on an actual model of the vehicle, which is not specifically limited herein.

It can be understood that, in the embodiments of the present disclosure, the torque threshold of the driving motor is matched based on the rotational speed difference, and whether the rotational speed difference is in the protection interval, and whether the output torque is greater than the torque threshold are determined, thereby determining whether the differential protection function of the differential can be activated based on different situations.

In the embodiments of the present disclosure, the differential protection function includes matching a predetermined torque of the driving motor based on the rotational speed interval in which the rotational speed difference is located, and reducing the output torque of the driving motor to the predetermined torque.

It can be understood that, in the embodiments of the present disclosure, the differential protection function is mainly to match the predetermined torque of the driving motor based on the rotational speed interval in which the rotational speed difference is located, and reduce the output torque of the driving motor, thereby reducing the rotational speed difference between the left wheel and the right wheel, increasing a braking force of the wheel, and realizing smooth driving of the vehicle.

In step S103, activate a differential protection function of the differential and reduce the output torque of the driving motor to a target torque by using the differential protection function when the rotational speed difference is in the predetermined protection interval and the output torque is greater than the torque threshold. Not activate the differential protection function when the rotational speed difference is not in the predetermined protection interval and/or the output torque is not greater than the torque threshold.

It can be understood that, in the embodiments of the present disclosure, the differential protection function of the differential can be activated only when the two conditions are satisfied simultaneously, that is, when the rotational speed difference is in the predetermined protection interval and the output torque is greater than the torque threshold, thereby avoiding simultaneous activation of the differential and the TCS which affects the driving performance of the vehicle. The differential protection function is utilized to reduce the output torque of the driving motor to the target torque until the electric vehicle gets out of predicament. By monitoring the rotational speed difference between the left wheel and the right wheel and the output torque change of the motor, active protection of the differential is realized, thereby improving the driving safety of the vehicle and improving the user experience of the vehicle.

In the embodiments of the present disclosure, the method for protecting the differential further includes, before activating the differential protection function of the differential: detecting whether a traction control system is activated; activating the differential protection function in a case where the traction control system is not activated; and in a case where the traction control system is activated and after the output torque of the driving motor is reduced by using the traction control system, activating the differential protection function when the rotational speed difference is in the predetermined protection interval and the output torque is greater than the torque threshold, and not activating the differential protection function when the rotational speed difference is not in the predetermined protection interval and/or the output torque is not greater than the torque threshold.

It can be understood that, in the embodiments of the present disclosure, before activating the differential protection function of the differential, whether the traction control system is activated is first detected. In a case where the traction control system is not activated, the differential protection function is directly activated. In a case where the traction control system is activated, the traction control system is utilized to reduce the output torque of the driving motor. When the rotational speed difference is in the protection interval and the output torque is greater than the torque threshold, the differential protection function is activated. It avoids the simultaneous activation of the differential protection function and the traction control system which affects the driving performance of the vehicle and causes differential failure, thereby improving the driving safety of the vehicle.

In the embodiments of the present disclosure, an execution priority of the traction control system is higher than an execution priority of the differential protection function.

It can be understood that, in the embodiments of the present disclosure, the execution priority of the traction control system is higher than the execution priority of the differential protection function. In this way, it ensures that, when the vehicle slips, the output torque of the motor is firstly reduced, and a braking force is applied to a slipping wheel to slow down an expansion of the rotational speed difference between the left wheel and the right wheel. Then, the differential protection function is activated based on an actual situation, and the output torque of the driving motor is reduced to the predetermined torque. It avoids the differential protection function and the traction control system being activated simultaneously which affects the driving performance of the vehicle, thereby improving the driving safety of the vehicle.

In the embodiments of the present disclosure, the method for protecting the differential further includes, after reducing the output torque of the driving motor to the target torque by using the differential protection function: detecting whether a current state of an electric vehicle satisfies an exit condition for the differential protection function; and releasing a torque limit on the driving motor and restoring the driving motor to respond to a request torque when the current state of the electric vehicle satisfies the exit condition for the differential protection function.

The exit condition may be a condition that is satisfied when the rotational speed difference is reduced to within a predetermined safety range, which is not specifically limited here.

It can be understood that, in the embodiments of the present disclosure, when the electric vehicle satisfies the exit condition of the differential protection function, the torque limit on the driving motor is released in time, and the driving motor is restored to respond to the request torque, thereby improving the driving smoothness of the vehicle.

According to the method for protecting the differential of the embodiments of the present disclosure, the rotational speed difference between the rotational speeds of the half shafts in the differential and the output torque of the driving motor are acquired, and the torque threshold of the driving motor is matched based on the rotational speed difference. Whether the rotational speed difference is in the predetermined protection interval, and whether the output torque is greater than the torque threshold are determined. In this case, the differential protection function of the differential is activated only when two conditions are satisfied simultaneously, thus avoiding the frequent activation of the differential protection function. In addition, the differential protection function is utilized to reduce the output torque of the driving motor to the target torque, and the active protection of the differential is realized by monitoring the rotational speed difference between the left wheel and the right wheel and the output torque change of the motor. Therefore, the driving safety of the vehicle is improved, and the user experience of the vehicle is improved.

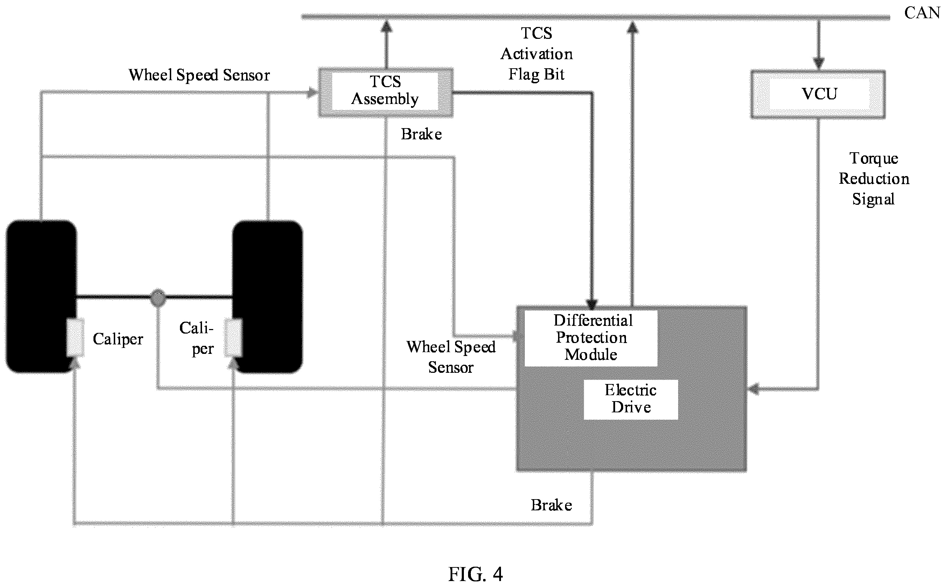

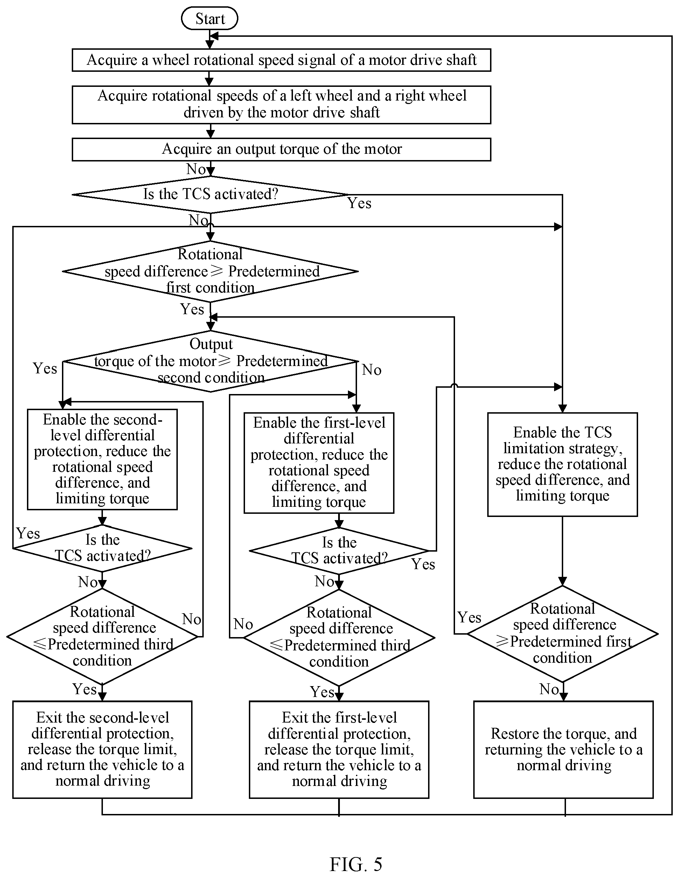

The method for protecting the differential may be described in detail below in conjunction with FIG. 4 and FIG. 5, and the specific steps are as follows.

Step 1: acquire a wheel rotational speed signal of a motor drive shaft, a rotational speed difference between a left wheel and a right wheel, and an output torque of the motor, and perform a first differential protection or a second differential protection based on a predetermined condition.

The rotational speeds of the left wheel and the right wheel of the vehicle and the output torque of the motor within a certain period of time are acqiured, and the rotational speed difference between the left wheel and the right wheel driven by the motor drive shaft is calculated as:

$$\triangle n = |n \text{ left wheel} - n \text{ right wheel}|.$$

Then, the output torque of the motor corresponding to the rotational speed difference and a predetermined maximum torque allowed under the current rotational speed difference are looked up in a table, as shown in Table 1 below. Table 1 is a lookup table of a maximum torque allowed to be outputted by the motor under the current rotational speed difference.

Table 1

| Rotational speed difference | n1 | n2 | n3 | n4 | n5 |
|---|---|---|---|---|---|
| Maximum torque allowed to be outputted by the motor under the current rotational speed difference | Tq1 | Tq2 | Tq3 | Tq4 | Tq5 |

According to data about the rotational speed difference of the left wheel and the right wheel and data about the output torque of the motor, when a predetermined first condition for the differential protection is satisfied, a first-level differential protection is started. When a predetermined second condition for the differential protection is satisfied, a second-level differential protection is started.

Step 2: control the output torque of the motor under the first-level differential protection.

When the vehicle starts or accelerates on a low-friction surface, the first-level differential protection may be activated when the rotational speed difference between the left wheel and the right wheel and the output torque of the motor satisfy the condition for the first-level differential protection. In this state, a request torque of the motor sent by a Vehicle Control Unit (VCU) may be linearly limited to a predetermined value, and information about the first-level differential protection may be reported, thereby reducing the rotational speed difference between the left wheel and the right wheel, increasing the braking force of the wheels, and realizing smooth driving or getting out of predicament of the vehicle.

Step 3: control the output torque of the motor under the second-level differential protection.

When the vehicle starts or accelerates on a low-friction surface, the second-level differential protection may be activated when a rotational speed difference between a left wheel and a right wheel driven by the motor drive shaft and the output torque of the motor satisfy the condition for the second-level differential protection. In this state, the request torque of the motor sent by the VCU may be quickly limited to the predetermined value, and information about the second-level differential protection may be reported, thereby reducing the rotational speed difference between the left wheel and the right wheel, increasing the braking force of the wheels, and realizing the smooth driving or getting out of predicament of the vehicle.

Step 4: control the output torque of the motor when both the TCS and the differential protection function are activated.

When the vehicle starts or accelerates on a low-friction surface, and both the TCS and the differential protection function are activated, a following sequence may be followed. First, when the rotational speed difference between the left wheel and the right wheel driven by the motor drive shaft is too large to reach the threshold, the TCS may be activated preferentially to reduce the rotational speed difference between the left wheel and the right wheel driven by the motor drive shaft and reduce the output torque of the motor. After the TCS activation is finished, when the rotational speed difference between the left wheel and the right wheel and the output torque of the motor do not drop to a normal range and both the rotational speed difference and the output torque of the motor satisfiy the predetermined first condition for the differential protection or the predetermined second condition for the differential protection, the differential protection function is activated, and the first-level differential protection or the second-level differential protection is peformed according to the predetermined first condition and the predetermined second condition. In this way, an influence of simultaneous activation of the TCS and the differential protection on the vehicle performance is avoided. The rotational speed difference between the left wheel and the right wheel driven by the motor drive shaft and the output torque of the motor are effectively reduced, thereby realizing smooth driving and getting out of predicament of the vehicle. After the TCS activation is finished, when the rotational speed difference between the left wheel and the right wheel and the output torque of the motor drop to the normal range, the differential protection function may not be activated, and the output torque change of the motor may be controlled based on a limitation strategy of the TCS.

Step 5: release the torque limit when the first-level differential protection is exited.

When a first-level differential protection is activated, the rotational speed difference between the left wheel and the right wheel may be reduced. When the rotational speed difference is reduced to a certain threshold, the first-level differential protection may be exited, and the torque limit may be released, allowing the output torque of the motor to be restored.

Step 6: release the torque limit when the second-level differential protection is exited.

When the second-level differential protection is activated, the rotational speed difference between the left wheel and the right wheel may be reduced rapidly. When the rotational speed difference is reduced to a certain threshold, the second-level differential protection may be exited, and the torque limit may be released, allowing the output torque of the motor to be restored.

Step 7: return to a normal control on the rotational speed difference between the left wheel and the right wheel driven by the motor drive shaft and the output torque of the motor when the vehicle gets out of predicament.

When the vehicle starts or accelerates on a low-friction surface, after a high rotational speed difference between the left wheel and the right wheel and the output torque of the motor are processed by a control strategy of the TCS and the limitation strategy of the differential protection, the speed difference between the left wheel and the right wheel of the vehicle and the output torque of the motor can be effectively limited. Therefore, the vehicle can smoothly get out of predicament, and the rotational speed difference between the left wheel and the right wheel driven by the motor drive shaft and the output torque of the motor can be restored to the normal control.

Next, the device for protecting the differential according to the embodiments of the present disclosure may be described with reference to the accompanying drawings.

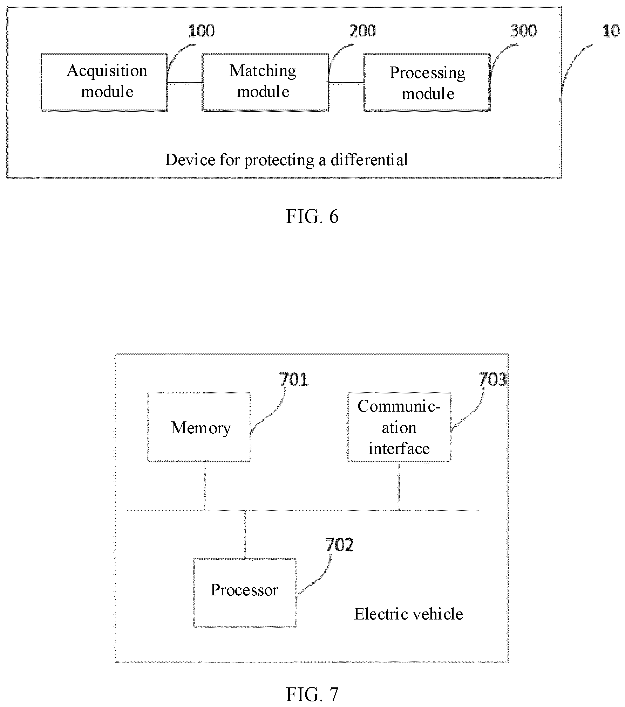

FIG. 6 is a schematic block diagram of a device for protecting a differential according to an embodiment of the present disclosure.

As shown in FIG. 6, a device 10 for protecting a differential includes an acquisition module 100, a matching module 200, and a processing module 300.

The acquisition module 100 is configured to acquire a rotational speed difference between rotational speeds of half shafts in the differential and an output torque of a driving motor. The matching module 200 is configured to match a torque threshold of the driving motor based on the rotational speed difference, and determine whether the rotational speed difference is in a predetermined protection interval and whether the output torque is greater than the torque threshold. The processing module 300 is configured to: activate a differential protection function of the differential and reduce the output torque of the driving motor to a target torque by using the differential protection function when the rotational speed difference is in the predetermined protection interval and the output torque is greater than the torque threshold; and not activate the differential protection function when the rotational speed difference is not in the predetermined protection interval and/or the output torque is not greater than the torque threshold.

In the embodiments of the present disclosure, the predetermined protection interval includes one or more rotational speed intervals. A rotational speed interval with a greater rotational speed corresponds to a smaller predetermined torque. The differential protection function includes: matching a predetermined torque of the driving motor based on the rotational speed interval in which the rotational speed difference is located, and reducing the output torque of the driving motor to the predetermined torque.

In the embodiments of the present disclosure, the processing module 300 is further configured to: detect whether a traction control system is activated; activate the differential protection function in a case where the traction control system is not activated; and in a case where the traction control system is activated and after the output torque of the driving motor is reduced by using the traction control system, activate the differential protection function when the rotational speed difference is in the predetermined protection interval and the output torque is greater than the torque threshold, and not activate the differential protection function when the rotational speed difference is not in the predetermined protection interval and/or the output torque is not greater than the torque threshold.

In the embodiments of the present disclosure, an execution priority of the traction control system is higher than an execution priority of the differential protection function.

In the embodiments of the present disclosure, the processing module 300 is further configured to: detect whether a current state of an electric vehicle satisfies an exit condition for the differential protection function; and release a torque limit on the driving motor and restore the driving motor to respond to a request torque when the current state of the electric vehicle satisfies the exit condition for the differential protection function.

It should be noted that the explanation of the embodiments of the method for protecting the differential described above is also applicable to the device for protecting the differential of this embodiment, which is not repeated herein.

According to the device for protecting the differential of the embodiments of the present disclosure, the rotational speed difference between the rotational speeds of the half shafts in the differential and the output torque of the driving motor are acquired, and the torque threshold of the driving motor is matched based on the rotational speed difference. Whether the rotational speed difference is in the predetermined protection interval, and whether the output torque is greater than the torque threshold are determined. In this case, the differential protection function of the differential is activated only when two conditions are satisfied simultaneously, thus avoiding frequent activation of the differential protection function. In addition, the differential protection function is utilized to reduce the output torque of the driving motor to the target torque, and active protection for the differential is realized by monitoring the rotational speed difference between a left wheel and a right wheel and an output torque change of the motor. Therefore, the driving safety of the vehicle is improved, and the user experience of the vehicle is improved.

FIG. 7 is a schematic structural diagram of an electric vehicle according to an embodiment of the present disclosure. The electric vehicle may include a memory 701, a processor 702, and a computer program stored in the memory 701 and executable by the processor 702. The processor 702, when executing the program, implements the method for protecting the differential as described in the above embodiments.

Further, the electronic device further includes: a communication interface 703 configured to perfrom communication between the memory 701 and the processor 702; and the memory 701 storing a computer program executable by the processor 702.

The memory 701 may include a high-speed Random Access Memory (RAM), and may also include a non-volatile memory, such as at least one disk memory.

When the memory 701, the processor 702, and the communication interface 703 are implemented independently, the communication interface 703, the memory 701, and the processor 702 may be interconnected and communicate with each other via a bus. The bus may be an Industry Standard Architecture (ISA) bus, a Peripheral Component (PCI) bus, or an Extended Industry Standard Architecture (EISA) bus. The buses may include an address bus, a data bus, a control bus, etc. For the convenience of description, only one thick line is used for representing the bus in FIG. 7, but it does not mean that there is only one bus or one type of bus.

Optionally, in a specific implementation, when the memory 701, the processor 702, and the communication interface 703 are integrated on a single chip for an implementation, the memory 701, the processor 702, and the communication interface 703 may communicate with each other through an internal interface.

The processor 702 may be a Central Processing Unit (CPU), or an Application Specific Integrated Circuit (ASIC), or one or more integrated circuits configured to implement an embodiment of the present disclosure.

The embodiments of the present disclosure further provide a computer-readable storage medium, having a computer program stored thereon. A processor, when executing the computer program, implements the method for protecting the differential as described in the above embodiments.

In the description of this specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or N embodiments or examples in a suitable manner. In addition, those skilled in the art can combine the different embodiments or examples and the features of the different embodiments or examples described in this specification without contradicting each other.

In addition, the terms "first" and "second" are only used for descriptive purposes, and cannot be understood as indicating or implying relative importance or implicitly indicating the number of indicated technical features. Therefore, the features defined with "first" and "second" may explicitly or implicitly include at least one of the features. In the description of the present disclosure, "N" means at least two, such as two, three, unless otherwise specifically defined.

Any process or method described in a flowchart or described herein in other ways may be understood to include one or N modules, segments, or portions of codes of executable instructions for achieving specific logical functions or steps in the process. The scope of a preferred embodiment of the present disclosure includes other implementations. A function may be performed not in a sequence shown or discussed, including a substantially simultaneous manner or a reverse sequence based on the function involved, which should be understood by those skilled in the art to which the embodiments of the present disclosure belong.

It should be understood that each part of the present disclosure may be realized by hardware, software, firmware, or a combination thereof. In the above embodiments, N steps or methods may be realized by software or firmware stored in the memory and executed by an appropriate instruction execution system. For example, when it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a Programmable Gate Array (PGA), a Field Programmable Gate Array (FPGA), etc.

It should be understood by those skilled in the art that all or a part of the steps carried by the method in the above-described embodiments may be completed by relevant hardware instructed by a program. The program may be stored in a computer-readable storage medium. When the program is executed, one or a combination of the steps of the method in the above-described embodiments may be included.

Although embodiments of the present disclosure have been shown and described above, it should be understood that the above embodiments are merely exemplary, and cannot be construed as limitations of the present disclosure. For those skilled in the art, changes, modifications, alternatives, and variants can be made to the above embodiments without departing from the scope of the present disclosure.

**Claims**

1.  A method for protecting a differential, comprising:

    acquiring a rotational speed difference between rotational speeds of half shafts in the differential and an output torque of a driving motor;
    matching a torque threshold of the driving motor based on the rotational speed difference, and determining whether the rotational speed difference is in a predetermined protection interval and whether the output torque is greater than the torque threshold; and
    activating a differential protection function of the differential and reducing the output torque of the driving motor to a target torque by using the differential protection function when the rotational speed difference is in the predetermined protection interval and the output torque is greater than the torque threshold; and not activating the differential protection function when the rotational speed difference is not in the predetermined protection interval and/or the output torque is not greater than the torque threshold.

2.  The method for protecting the differential according to claim 1, wherein:

    the predetermined protection interval comprises one or more rotational speed intervals, wherein a rotational speed interval with a greater rotational speed corresponds to a smaller predetermined torque; and
the differential protection function comprises: matching a predetermined torque of the driving motor based on the rotational speed interval in which the rotational speed difference is located, and reducing the output torque of the driving motor to the predetermined torque.

3.  The method for protecting the differential according to claim 1, further comprising, before activating the differential protection function of the differential:

    detecting whether a traction control system is activated;
    activating the differential protection function in a case where the traction control system is not activated; and
    in a case where the traction control system is activated and after the output torque of the driving motor is reduced by using the traction control system, activating the differential protection function when the rotational speed difference is in the predetermined protection interval and the output torque is greater than the torque threshold, and not activating the differential protection function when the rotational speed difference is not in the predetermined protection interval and/or the output torque is not greater than the torque threshold.

4.  The method for protecting the differential according to claim 3, wherein an execution priority of the traction control system is higher than an execution priority of the differential protection function.

5.  The method for protecting the differential according to claim 1, further comprising, after reducing the output torque of the driving motor to the target torque by using the differential protection function:

    detecting whether a current state of an electric vehicle satisfies an exit condition for the differential protection function; and
    releasing a torque limit on the driving motor and restoring the driving motor to respond to a request torque when the current state of the electric vehicle satisfies the exit condition for the differential protection function.

6.  A device for protecting a differential, comprising:

    an acquisition module configured to acquire a rotational speed difference between rotational speeds of half shafts in the differential and an output torque of a driving motor;
    a matching module configured to match a torque threshold of the driving motor based on the rotational speed difference, and determine whether the rotational speed difference is in a predetermined protection interval and whether the output torque is greater than the torque threshold; and
    a processing module configured to: activate a differential protection function of the differential and reduce the output torque of the driving motor to a target torque by using the differential protection function when the rotational speed difference is in the predetermined protection interval and the output torque is greater than the torque threshold; and not activate the differential protection function when the rotational speed difference is not in the predetermined protection interval and/or the output torque is not greater than the torque threshold.

7.  The device for protecting the differential according to claim 6, wherein:

    the predetermined protection interval comprises one or more rotational speed intervals, wherein a rotational speed interval with a greater rotational speed corresponds to a smaller predetermined torque; and
    the differential protection function comprises: matching a predetermined torque of the driving motor based on the rotational speed interval in which the rotational speed difference is located, and reducing the output torque of the driving motor to the predetermined torque.

8.  The device for protecting the differential according to claim 6, wherein the processing module is further configured to:

    detect whether a traction control system is activated;
    activate the differential protection function in a case where the traction control system is not activated; and
    in a case where the traction control system is activated and after the output torque of the driving motor is reduced by using the traction control system, activate the differential protection function when the rotational speed difference is in the predetermined protection interval and the output torque is greater than the torque threshold, and not activate the differential protection function when the rotational speed difference is not in the predetermined protection interval and/or the output torque is not greater than the torque threshold.

9.  The device for protecting the differential according to claim 8, wherein an execution priority of the traction control system is higher than an execution priority of the differential protection function.

10. The device for protecting the differential according to claim 6, wherein the processing module is further configured to:

    detect whether a current state of an electric vehicle satisfies an exit condition for the differential protection function; and
    release a torque limit on the driving motor and restore the driving motor to respond to a request torque when the current state of the electric vehicle satisfies the exit condition for the differential protection function.

11. An electric vehicle, comprising:

    a memory;
    a processor; and
    a computer program stored in the memory and executable by the processor, wherein the processor, when executing the computer program, implements the method for protecting the differential according to any one of claims 1 to 5.

12. A computer-readable storage medium, having a computer program stored thereon, wherein a processor, when executing the computer program, implements the method for protecting the differential according to any one of claims 1 to 5.

| Acquire a speed difference between a left half shaft and a right half shaft of a differential | S10 |

↓

| Enable a differential protection when the speed difference between the left half shaft and the right half shaft of the differential satisfies a first predetermined condition | S20 |

↓

| Enable a first differential protection or a second differential protection based on a relation between the speed difference between the left half shaft and the right half shaft of the differential and a second predetermined condition | S30 |

↓

| Reduce an output torque of a motor based on the first differential protection or the second differential protection | S40 |

FIG. 1

| Acquire accumulated slip energy of a differential based on a speed difference between wheels of a vehicle at various stages during operating time and a current output torque of a motor | S201 |

↓

| Acquire differential residual slip energy based on the accumulated slip energy of the differential and an energy dissipation coefficient | S2021 |

↓

| Determine a maximum torque outputted by the motor based on the residual slip energy of the differential | S2022 |

↓

| Control the output torque of the motor based on the maximum torque | S203 |

FIG. 2

| Acquire a rotational speed difference between rotational speeds of half shafts in the differential and an output torque of a driving motor | S101 |

| Match a torque threshold of the driving motor based on the rotational speed difference, and determine whether the rotational speed difference is in a predetermined protection interval and whether the output torque is greater than the torque threshold | S102 |

| Activate a differential protection function of the differential and reduce the output torque of the driving motor to a target torque by using the differential protection function when the rotational speed difference is in the predetermined protection interval and the output torque is greater than the torque threshold; and not activate the differential protection function when the rotational speed difference is not in the predetermined protection interval and/or the output torque is not greater than the torque threshold | S103 |

FIG. 3

FIG. 4

EP 4 563 397 A1

FIG. 5

100                    200                    300            10

| Acquisition module | Matching module | Processing module |
|---|---|---|

Device for protecting a differential

FIG. 6

701                          703

| Memory | Communic-ation interface |
|---|---|

702

| Processor |
|---|

Electric vehicle

FIG. 7

## INTERNATIONAL SEARCH REPORT

| International application No. |
| --- |
| **PCT/CN2023/121067** |

### A. CLASSIFICATION OF SUBJECT MATTER

B60L15/20(2006.01)i

According to International Patent Classification (IPC) or to both national classification and IPC

### B. FIELDS SEARCHED

Minimum documentation searched (classification system followed by classification symbols)

IPC:B60L

Documentation searched other than minimum documentation to the extent that such documents are included in the fields searched

Electronic data base consulted during the international search (name of data base and, where practicable, search terms used)

CNTXT; CJFD; WPABSC; ENTXTC: 差速器, 扭矩, 转矩, 转速差, 阈值, 电机, 降低; VEN; USTXT; EPTXT; WOTXT; WPABS: differential, torque, speed difference, threshold, motor, reduce.

### C. DOCUMENTS CONSIDERED TO BE RELEVANT

| Category* | Citation of document, with indication, where appropriate, of the relevant passages | Relevant to claim No. |
| --- | --- | --- |
| PX | CN 116039400 A (CHANG'AN NEW ENERGY NANJING INSTITUTE CO., LTD.) 02 May 2023 (2023-05-02) claims 1-12 | 1-12 |
| X | CN 112874320 A (BEIJING CHJ INFORMATION TECHNOLOGY CO., LTD.) 01 June 2021 (2021-06-01) description, paragraphs 68-172, and figures 1-5 | 1-12 |
| X | CN 115593415 A (CHONGQING CHANG'AN AUTOMOBILE CO., LTD.) 13 January 2023 (2023-01-13) description, paragraphs 37-49, and figures 1-5 | 1-12 |
| A | KR 20110062124 A (HYUNDAI MOTOR CO., LTD.) 10 June 2011 (2011-06-10) entire document | 1-12 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 December 2023** | **05 January 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121067**

| Patent document cited in search report | | | Publication date (day/month/year) | Patent family member(s) | | | Publication date (day/month/year) |
|---|---|---|---|---|---|---|---|
| CN | 116039400 | A | 02 May 2023 | CN | 116039400 | B | 26 September 2023 |
| CN | 112874320 | A | 01 June 2021 | CN | 112874320 | B | 24 January 2023 |
| CN | 115593415 | A | 13 January 2023 | None | | | |
| KR | 20110062124 | A | 10 June 2011 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310333800
- CN 115675108 A
- CN 115143259 A
- CN 102358181 A